# EUROPÄISCHE PATENTSCHRIFT

(11) **EP 3 566 898 B1**
(45) Veröffentlichungstag und Bekanntmachung des Hinweises auf die Patenterteilung: **07.10.2020**
(21) Anmeldenummer: 19169844.8
(22) Anmeldetag: 17.04.2019
(51) Int. Cl.: B60N 2/07, B60N 2/02

(54) **KONTAKTIERUNGSSYSTEM ZUM ELEKTRISCHEN VERBINDEN EINES BORDNETZES EINES KRAFTFAHRZEUGS MIT EINEM ENTNEHMBAREN FAHRZEUGSITZ ODER EINER SITZANLAGE**
CONTACT SYSTEM FOR ELECTRICAL CONNECTION OF AN ELECTRICAL SYSTEM OF A MOTOR VEHICLE WITH A REMOVABLE VEHICLE SEAT OR A SEAT ASSEMBLY
SYSTÈME DE CONTACT PERMETTANT DE RACCORDER ÉLECTRIQUEMENT UN RÉSEAU DE BORD D'UN VÉHICULE AUTOMOBILE À UN SIÈGE DE VÉHICULE AMOVIBLE OU UNE INSTALLATION DE SIÈGE

(30) Priorität: 08.05.2018 DE 102018207170
(43) Veröffentlichungstag der Anmeldung: 13.11.2019
(73) Patentinhaber: Magna Seating (Germany) GmbH, 63877 Sailauf (DE)
(72) Erfinder: BREHM, Christoph, 64839 Münster (DE)
(74) Vertreter: Völger, Silke Beatrix

(56) Entgegenhaltungen:
- EP-A2- 2 298 609

## Beschreibung

Die vorliegende Erfindung betrifft ein Kontaktierungssystem zum elektrischen Verbinden eines Bordnetzes eines Kraftfahrzeugs mit einem entnehmbaren Fahrzeugsitz oder einer Sitzanlage

Fahrzeugsitze für Fahrer und Beifahrer sind zur Einstellung einer optimalen Sitzposition längsverschieblich über ein Schienensystem, welches zwei parallel verlaufende Sitzschienenpaare umfasst, auf dem Kraftfahrzeugboden angeordnet. Die Position des Sitzes ist über die im Bereich der Sitzschienenpaare angeordneten Verriegelungsmittel arretierbar, wobei die Arretierung über Betätigungshebel von einem Insassen aufgehoben und der Sitz längs der fahrzeugseitigen Schiene verschoben werden kann.

Zur Vergrößerung der Ladefläche ist es weiterhin bekannt diese längsverschieblich angebundenen Fahrzeugsitze insbesondere der 2. und 3. Sitzreihe lösbar mit dem Fahrzeugboden zu verbinden. Ein derartiges Befestigungssystem von Fahrzeugsitzen ist beispielsweise aus der EP 0 949 111 B1 bekannt. Dieses modulare Befestigungssystem weist eine Nockensteuerung für eine Verschiebung des Kraftfahrzeugsitzes in Längsrichtung und eine Arretierung des Sitzes in der eingestellten Position auf. Ein mittels eines Betätigungshebels betätigbarer Steuernocken bewirkt ein Verschwenken von Verriegelungsmitteln. Hierdurch kann ein Arretieren des Fahrzeugsitzes in den Schienen, ein Lösen des Fahrzeugsitzes zwecks Längsverschiebung, sowie eine Position der Bauteile des Befestigungssystems eingestellt werden, in der ein Herausnehmen des Kraftfahrzeugsitzes möglich ist.

Zusätzlich sind Kraftfahrzeugsitze häufig mit Funktionen ausgestattet, die eine elektrische Verbindung mit dem Bordnetz des Kraftfahrzeugs benötigen. Eine derartige Funktion ist beispielsweise eine Sitzheizung oder eine elektrische Einstellbarkeit der Sitzhöhe und Sitztiefe. Bei entnehmbaren Kraftfahrzeugsitzen muss diese elektrische Verbindung ebenfalls lösbar und im Falle des Wiedereinsetzens des Kraftfahrzeugsitzes muss eine sichere Kontaktierung der elektrischen Verbindung einfach wieder herstellbar sein. Dies ist insbesondere dann schwierig und konstruktiv aufwändig, wenn der Kraftfahrzeugsitz längsverschieblich am Fahrzeugboden angebunden ist und derart konzipiert ist, dass der Sitz an jeder Position längs des Schienensystems entnommen und wiedereingesetzt werden kann. Hier muss sichergestellt werden, dass in jeder Position des Kraftfahrzeugsitzes längs der Bodenschiene eine Kontaktierung zwischen fahrzeugseitiger Stromversorgung und Kraftfahrzeugsitz möglich ist.

Aus der EP 2 298 609 B1 ist ein Befestigungssystem und eine Elektrifizierung eines Kraftfahrzeugsitzes bekannt. Das Befestigungssystem umfasst hierbei eine Gleitschiene, die an der Fahrzeugstruktur angebunden ist und die Ankerflügel aufweist. An der Sitzstruktur ist jeder Gleitschiene zugeordnet mindestens ein Verankerungsmechanismus angeordnet, wobei der Verankerungsmechanismus einen Riegel umfasst, der zwischen einer zurückgezogenen Position, in der der Verankerungsmechanismus in die Schiene eingesetzt werden kann, und einer ausgefahrenen Position, in der der Riegel in Eingriff mit den Ankerflügeln ist und der Sitz in der Schiene arretiert und kontaktiert gehalten ist. Des Weiteren umfasst das Befestigungssystem einen beweglichen Träger der einen Kontaktstift aufweist. Der Träger ist um eine Drehachse derart verschwenkbar gelagert, dass er in eine Position verschwenkt werden kann, in der eine Kontaktierung des Kontaktstiftes des Trägers mit einer Leiterbahn an der Schiene hergestellt wird und in eine Position, in der die Kontaktierung aufgehoben wird. Das Verschwenken des Trägers wird durch die Verschwenkbewegung des Riegels ausgelöst bzw. bewirkt. Der Riegel umfasst einen Bolzen 30, der in eine korrespondierende Ausnehmung 33 des Halters 22 eingreift, wodurch eine zwangsgeführte Kopplung entsteht.

Des Weiteren ist aus der EP 3 150 426 A1 ein Befestigungs- und Kontaktierungssystem bekannt. Das Befestigungssystem umfasst hierbei an der Gleitschiene angebundene Gleitschienen sowie korrespondierende Haltemittel, die sowohl eine Verriegelung in der Gleitschiene als auch eine Kontaktierung bewirken können. Hierfür sind die Haltemittel ähnlich einem Klappanker ausgeführt, wobei Verriegelungsmittel des Klappankers über eine Verschwenkbewegung mit Schlitzen der Gleitschiene in Eingriff gebracht werden können.

Aufgabe der vorliegenden Erfindung ist es daher ein Kontaktierungssystem zum elektrischen Verbinden eines Bordnetzes eines Kraftfahrzeugs mit einem entnehmbaren, längsverschieblichen Fahrzeugsitz derart weiterzubilden, dass es konstruktiv einfach aufgebaut ist, und dass sowohl beim Einsetzen als auch nach einem Längsverschieben eines Kraftfahrzeugsitzes in jeder Position eine elektrische Verbindung schnell und selbsttätig d.h. ohne zusätzliche Bedienung durch einen Nutzer möglich ist.

Diese Aufgabe löst die vorliegende Erfindung durch ein Kontaktierungssystem zum elektrischen Verbinden eines Bordnetzes eines Kraftfahrzeugs mit einem entnehmbaren Fahrzeugsitz mit den Merkmalen des Anspruch 1.

Durch das erfindungsgemäße Kontaktierungssystem zum elektrischen Verbinden eines Bordnetzes eines Kraftfahrzeugs mit einem entnehmbaren Sitz ist ein automatisches Kontaktieren des Kraftfahrzeugsitzes beim Einsetzen des Kraftfahrzeugsitzes an jeder beliebigen Position längs der Sitzschiene möglich. Auch ein Entnehmen des Kraftfahrzeugsitzes ist dementsprechend an jeder Position längs des Schienensystems möglich. Der Nutzer selbst bemerkt dabei keinen Unterschied zu einem herkömmlichen (ohne elektrische Verbindung) entnehmbaren Sitz.

Die Kontaktierung wird hierbei über eine Drehbewegung eines zylindrischen Elements mit Kontaktierungselementen beim Einsetzen des Kraftfahrzeugsitzes bewirkt. Bei der Drehbewegung verschwenken die Kontakte aus einem Gehäuse eines Kontaktierungssockels und werden mit der Stromschiene kontaktiert.

Bei der Kontaktierung des Kraftfahrzeugsitzes mit dem Bordnetz kann sowohl mindestens eine Verbindung mit der Stromversorgung als auch mindestens eine Datenverbindung hergestellt werden.

Noch weitere vorteilhafte Ausgestaltungen der vorliegenden Erfindung sind in den Unteransprüchen angegeben.

Die Längsrichtung entspricht der x-Richtung, die Querrichtung entspricht der y-Richtung, die Hochrichtung entspricht der z-Richtung in der Beschreibung und den zugeordneten Zeichnungen.

Die vorliegende Erfindung wird nachfolgend anhand von Ausführungsbeispielen beschrieben, wobei auf die anhängenden Zeichnungen Bezug genommen wird. Darin zeigen:
- Fig. 1: einen Querschnitt durch eine Kontaktierungsschiene des Kontaktierungssystems,
- Fig. 2: einen Ausschnitt der Kontaktierungsschiene gemäß Figur 1 in einer perspektivischen Ansicht,
- Fig. 3a-3c: das Einsetzen eines Kontaktierungssockels in die Kontaktierungsschiene in drei Schritten in einer Querschnittsdarstellung,
- Fig. 4a-4e: das Einsetzen und Entnehmen des Kontaktierungssockels in die Kontaktierungsschiene in mehreren Schritten in einer perspektivischen Darstellung,
- Fig. 5a: die Schleifereinheit des Kontaktierungssockels in einer perspektivischen Darstellung in unterschiedlichen Positionen,
- Fig. 5b: die Schleifereinheit gemäß Figur 5a in einer Ansicht von oben,
- Fig. 6a: die Schleifereinheit in einer Explosionsdarstellung; und
- Fig. 6b: der Kontaktierungssockel in einer Explosionsdarstellung.

Ein nicht dargestellter Kraftfahrzeugsitz ist über ein bekanntes Schienensystem, welches zwei parallel verlaufende Sitzschienenpaare aufweist, längsverschieblich d.h. in x-Richtung an der Fahrzeugkarosserie angebunden. Ein Sitzschienenpaar weist jeweils eine fahrzeugfest d.h. an einem Bodenelement angebundene Bodenschiene sowie eine an der Bodenschiene längsverschieblich gelagerte am Kraftfahrzeugsitz angebundene Sitzschiene auf. Die Position des Kraftfahrzeugsitzes ist über eine im Bereich der Sitzschienenpaare angeordnete Verriegelungseinheit arretierbar, wobei die Arretierung beispielsweise über einen verschwenkbar angebundenen Längsverstellhebel von einem Insassen aufgehoben und der Sitz längs der strukturfesten Bodenschiene verschoben werden kann. Bei der Entnahme des Kraftfahrzeugsitzes aus der Bodenschiene wird ein separater Sitzentnahmehebel betätigt, der sowohl die Arretierung in Längsverstellrichtung (x-Richtung) als auch in Entnahmerichtung (z-Richtung) aufhebt, sodass der Sitz entnommen werden kann. Die Ausgestaltung des Schienensystems, die Entnehmbarkeit des Kraftfahrzeugsitzes aus den Bodenschienen und die Führung zwischen Bodenschiene und Sitzschiene sowie die Arretierung in den Bodenschienen werden nicht näher beschrieben, da sie allgemein bekannt ist und in unterschiedlichen Ausführungsvarianten eingesetzt werden kann. Weiterhin umfasst der Kraftfahrzeugsitz auch elektrische Funktionen, diese können eine Vielzahl elektrischer Verbraucher wie beispielsweise eine Sitzheizung umfassen.

Das zum elektrischen Verbinden eines Bordnetzes eines Kraftfahrzeugs mit einem entnehmbaren Fahrzeugsitz oder einer Sitzanlage nachfolgend beschriebene erfindungsgemäße Kontaktierungssystem 1 umfasst eine Kontaktierungsschiene 2 und einen Kontaktierungssockel 3.

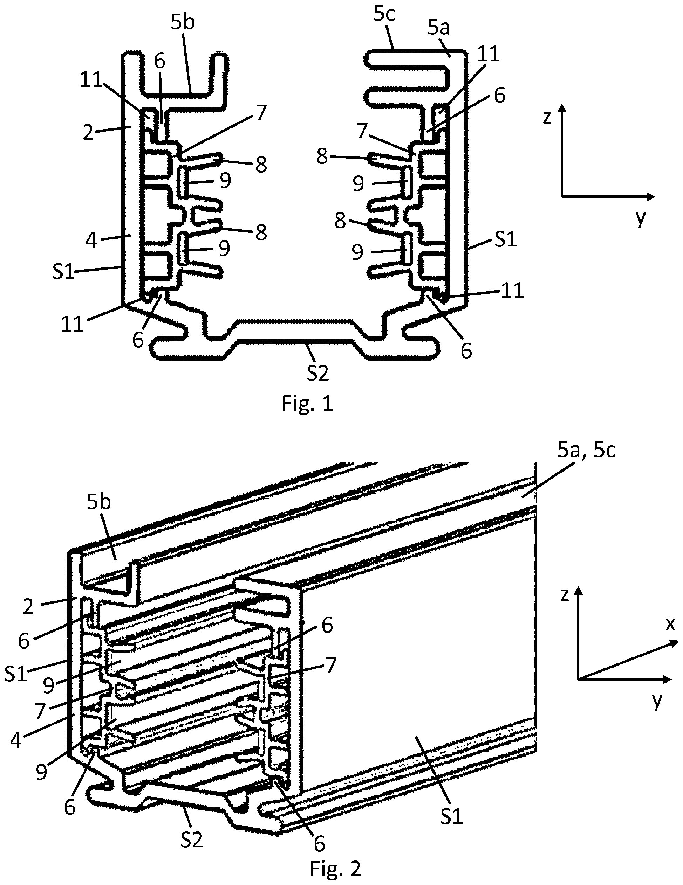

Die Kontaktierungsschiene 2 ist ebenfalls in Längsrichtung verlaufend und parallel beabstandet zu den Bodenschienen angeordnet. Die Kontaktierungsschiene 2 ist fahrzeugstrukturfest an einem Bodenelement des Kraftfahrzeugs angeordnet und weist eine Trägerschiene 4, die beispielsweise als Aluminiumprofil oder als gerolltes Profil einstückig ausgebildet ist, auf. Die Trägerschiene ist im Wesentlichen ein U-Profil ausgeführt, welches Schenkel S1 und einen die Schenkel verbindenden Steg S2 umfasst. Das U-Profil weist weiterhin am oberen Endbereich der Schenkel quer verlaufende Abschnitte 5a und 5b und beidseits angeordnete Halteleisten 6 auf. Der Abschnitt 5a weist eine Anschlagfläche 5c auf. Die Halteleisten 6 bilden mit den zugeordneten Schenkeln Führungsnuten 11. Wie es weiterhin aus den Figuren 1 und 2 zu erkennen ist, weist die Kontaktierungsschiene 2 beidseits an der Innenseite der Schenkel in Längsrichtung verlaufende Isolationsprofile 7 auf, die als Kunststoffprofile ausgebildet sind. Die Isolationsprofile 7 weisen jeweils zwei in Hochrichtung beabstandet zueinander verlaufende Nuten 8 auf die im Nutgrund die Kontaktstreifen bilden. Die Kontaktstreifen 9 im Nutgrund sind als Kupferstreifen 9 ausgeführt. Wie es aus den Figuren ersichtlich ist, sind die Isolationsprofile 7 über Halteleisten 10 in den Führungsnuten 11 gehalten. Die Kupferstreifen 9 stehen mit einer Bordnetzleitung des Bordnetzes des Kraftfahrzugs in Verbindung. Über die Bordnetzleitung können elektrischer Strom und/oder elektrische Signale übertragen werden. Die Bordnetzleitung sowie die Verbindung mit den Kupferstreifen sind zeichnerisch nicht dargestellt.

Die Endbereiche der Abschnitte 5a, 5b weisen in Querrichtung einen Abstand zueinander auf. Die Abschnitte 5a, 5b bilden eine Führungsfläche für die längs der Kontaktierungsschiene 2 verschiebbar gelagerten Kontaktierungssockel 3.

In einer alternativen Ausgestaltung kann anstelle der Ausführung einer separaten Kontaktierungsschiene diese auch integriert in die fahrzeugfeste Bodenschiene ausgeführt sein.

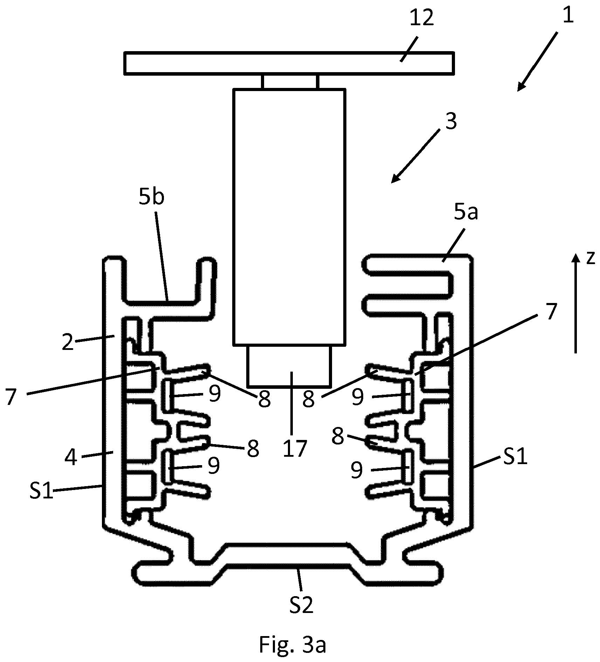

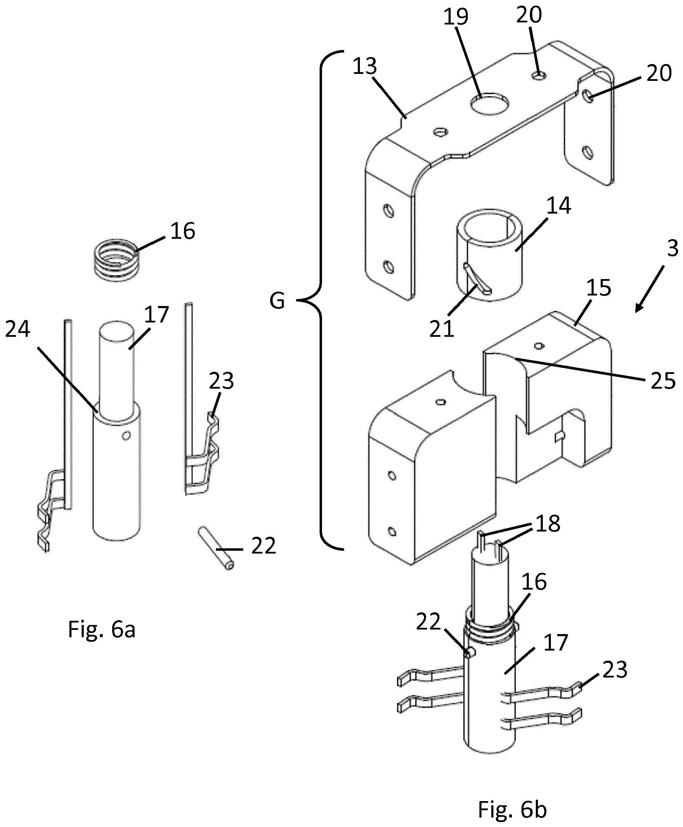

Die Figur 6b zeigt in einer Explosionsdarstellung den Kontaktierungssockel, der mit einer einem Kraftfahrzeugsitz oder einer Sitzbank zugeordneten Struktur verbunden ist. Die Sitzstruktur 12 ist in den Figuren 3a -3c schematisch durch ein plattenförmiges Element angedeutet. Grundsätzlich ist der Kraftfahrzeugsitz in den Zeichnungen nicht dargestellt.

Der Kontaktierungssockel besteht im Wesentlichen aus einem Abdeckrahmen 13, einer Hülse 14, einem Gehäuseelement 15, einem Federelement 16, einem zylindrischen Element 17 und Kontaktierungselementen 18.

Der Abdeckrahmen 13 ist als u-förmiges Rahmenelement ausgeführt und weist mittig eine Durchgangsbohrung 19 zur Durchführung des zylindrischen Elements 17 sowie Bohrungen 20 zur Befestigung des Gehäuseelementes 15 auf. Der Abdeckrahmen 13 und das Gehäuseelement 15 bilden eine Gehäuseeinheit. In einer alternativen Ausgestaltung können der Abdeckrahmen und das Gehäuseelement auch einteilig als Spritzgussbauteil ausgeführt sein.

Koaxial zu der Durchgangsbohrung 19 ist die Hülse 14 an dem Abdeckrahmen 13 angebunden. In die Mantelfläche der Hülse 14 sind an gegenüberliegenden Bereichen der Mantelfläche zwei bogenförmige Schlitze 21 als Führungsnuten eingebracht, die als Führung von an dem zylindrischen Element 17 befestigten Führungselementen dient.

Das zylindrische Element 17, die Feder 16, die Kontaktierungselemente 18 und der Stift 22 bilden eine Schleifereinheit, die in der Hülse 14 um die Längsachse in Hochrichtung verdrehbar gehalten ist. Die Schleifereinheit ist in der Figur 6a in einer Explosionsdarstellung gezeigt. Die beiden Kontaktierungselemente 18 sind als stabförmige Elemente mit einem an ihrem nach unten weisenden Endbereich fahnenförmigen Kontaktschwingenpaar 23 ausgeführt. Der Abstand der beiden Kontaktschwingen entspricht dabei dem Abstand der Nuten 8 bzw. der Kupferstreifen 9. Die Kontaktierungselemente 18 sind aus Kupfer ausgeführt. Selbstverständlich kann auch ein anderes elektrisch leitfähiges Material eingesetzt werden.

An ihrem oberen Endbereich der Kontaktierunsgelemente 18 bilden diese Steckkontakte zur elektrischen Anbindung an entsprechende elektrische Verbraucher des Kraftfahrzeugsitzes aus. Es ist möglich den oberen Endbereich als Stecker (Buchse) zu gestalten sodass eine Buchse (Stecker) direkt mit dem Bauteil verbunden wird.

Die Kontaktierungselemente 18 verlaufen in Hochrichtung durch das zylindrische Element 17, wobei das zylindrische Element aus einem thermoplastischen Kunststoffmaterial, vorzugsweise aus einem Polybutylenterephthalat (PBT) ausgeführt ist. In einem mittleren Abschnitt des zylindrischen Elements 17 ist ein zylindrischer Stift 22 querverlaufend durch das zylindrische Element 17 geführt. Die Endbereiche des Stiftes 22 ragen dabei aus der Mantelfläche des zylindrischen Elementes und bilden die Führungselemente. Zylindrisches Element und zylindrischer Stift können in einer alternativen Ausführung auch einteilig aus einem Spritzgussmaterial hergestellt sein. Das zylindrische Element ist mit einem ringförmigen Absatz 24 ausgeführt, auf dem das Federelement 16, welches als Spiralfeder ausgebildet ist, gehalten ist.

Aus dem Zusammenbau des Kontaktierungssockels 3 kann man erkennen, dass die Schleifereinheit durch die Hülse 14 gesteckt und mittels der Führungselemente in den Führungsnuten federvorgespannt geführt gehalten ist. Des Weiteren ist die Schleifereinheit in einem Gehäuseelement 15 aufgenommen, welches ebenfalls aus einem Kunststoffmaterial ausgeführt ist. Das Gehäuseelement 15 ist hierfür mit einer Aufnahmebohrung 25 ausgeführt und weist seitlich beidseits Ausnehmungen 26 auf, die beim Entnehmen des Kraftfahrzeugsitzes aus dem Schienensystem die Kontaktschwingenpaare 23 in dem Gehäuseelement 15 hereingeschwenkt aufnehmen.

Der elektrische Verbindungsvorgang zwischen dem Kraftfahrzeugsitz und dem Bordnetz ist in den Figuren 3a - 3c in drei Schritten schematisch gezeigt.

Figur 3a zeigt dabei das Einsetzen eines Kraftfahrzeugsitzes mittels des Kontaktierungssockels 3 in die Kontaktierungsschiene 2. Der Kontaktierungssockel 3 ist dabei auf der Unterseite der Sitzstruktur 12 angebracht, wobei die Sitzstruktur 12 sehr schematisch als plattenförmiges Element dargestellt ist. Das Einsetzen des Kontaktierungssockels 3 in die Kontaktierunsschiene 2 ist durch den Pfeil dargestellt (Hochrichtung). Aus der in Figur 3a gezeigten Situation ist ersichtlich, dass das zylindrische Element 17 mittels seines nach unten weisenden Endbereichs mit einer Länge L1 aus der Gehäuseeinheit G herausragt und beabstandet zu dem Steg S2 ist. Das zylindrische Element 17 ist weiterhin derart in der Gehäuseeinheit G und der Hülse 14 gehalten, dass die beiden Kontaktschwingenpaare 23 im Wesentlichen innerhalb der gegenüberliegenden Aufnahmeräume der Gehäuseeinheit positioniert sind. Dies wird durch das vorgespannte Federelement 16 erreicht, das dafür sorgt, dass die Kontaktschwingenpaare immer in die Gehäuseeinheit G einklappen, wenn der Kontaktierungssockel 3 beabstandet von dem Steg S2 ist. Hierdurch kann der Kontaktierungssockel 3 von oben in die Kontaktierungsschiene eingesetzt und durch den Spalt zwischen den Abschnitten 5a, 5b hindurchgeführt werden.

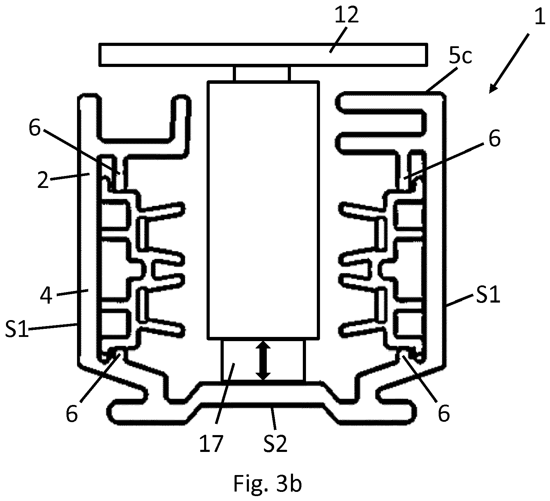

Beim weiteren Absenken des Kraftfahrzeugsitzes trifft die Unterseite des zylindrischen Elementes 17 auf den Steg S2 der Kontaktierungsschiene auf. Diese Position ist in der Figur 3b gezeigt. In dieser Position sind die Kontaktschwingenpaare 23 zur Kontaktierungsschiene bereits in z-Richtung ausgerichtet. Wie es durch den Doppelpfeil in der Figur 3b dargestellt ist, erfolgt nun beim weiteren Absenken des Kraftfahrzeugssitzes eine zwangsgeführte schraubenförmige Bewegung zwischen zylindrischem Element 17 und Hülse 14 (Kulissenführung Stift 22/Schlitz 21). Hierdurch verdreht sich das zylindrische Element 17 um seine Längsachse, wobei die Kontaktschwingenpaare 23 relativ zur Kontaktschiene verdreht werden. Des Weiteren findet gleichzeitig zwischen zylindrischem Element 17 und Gehäuseeinheit G eine überlagerte translatorische und rotatorische Bewegung statt.

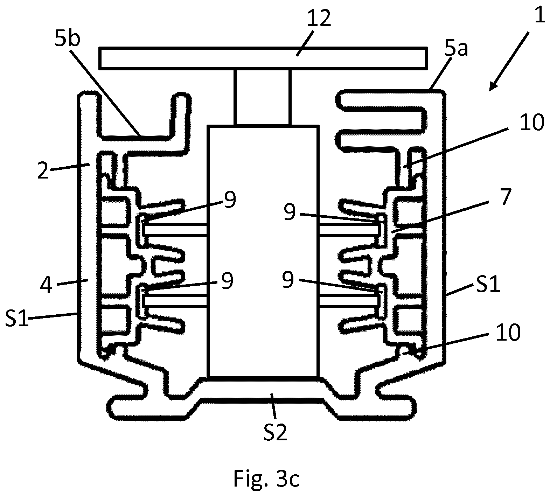

In Figur 3c ist die komplett abgesenkte Endposition des Kraftfahrzeugsitzes gezeigt. Bei vollständig abgesenktem Kraftfahrzeugsitz (Figur 3c) sind die Kontaktschwingenpaare 23 aus der Gehäuseeinheit G herausgeschwenkt und die Kontaktschwingen der Kontaktschwingenpaare 23 liegen auf den korrespondierenden Kontaktstreifen auf, wodurch eine elektrische Verbindung hergestellt ist.

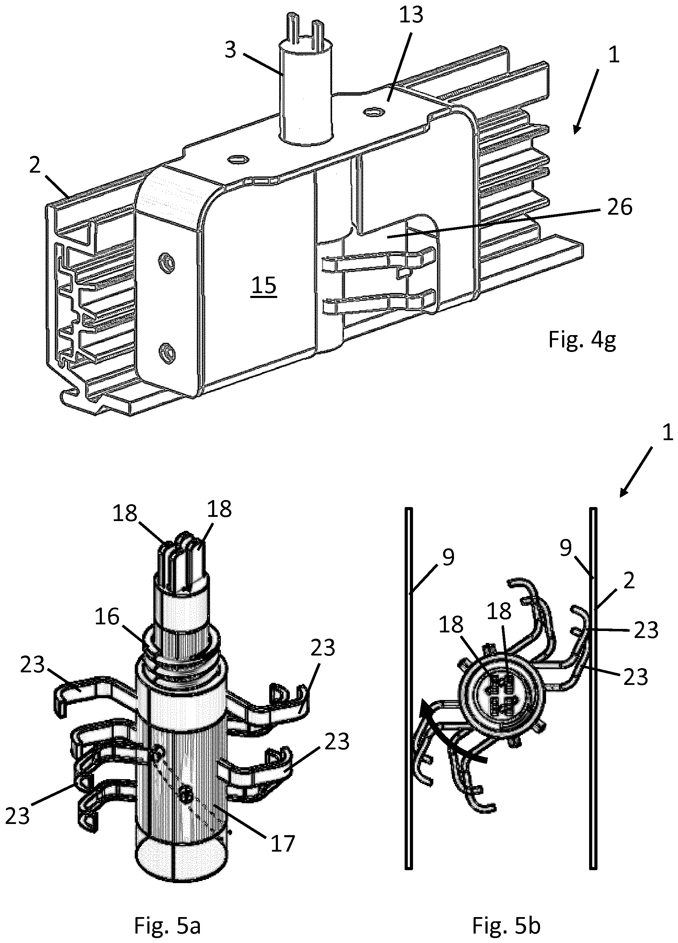

Das Herausschwenken der Kontaktschwingenpaare 23 (Verdrehen des zylindrischen Elements 17) ist in der Figur 5b durch den Pfeil dargestellt. Aus der Draufsicht werden unterschiedliche Stellungen der Kontaktschwingen ausgehend von einer kompletten in die Gehäuseeinheit G eingeschwenkten Stellung, bis zu der Stellung, in der die Kontaktschwingen mit den Kontaktstreifen 9 in elektrischer Verbindung sind, gezeigt.

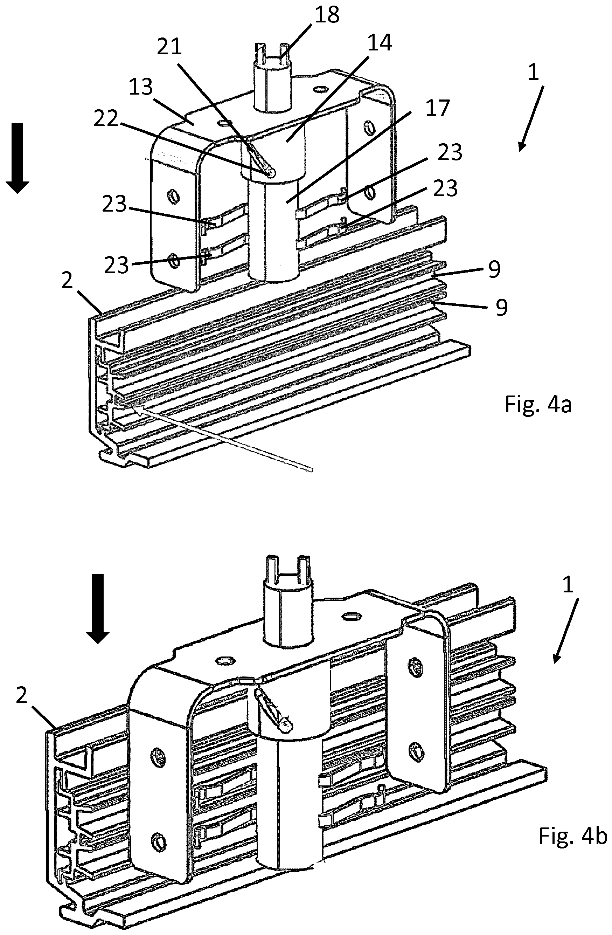

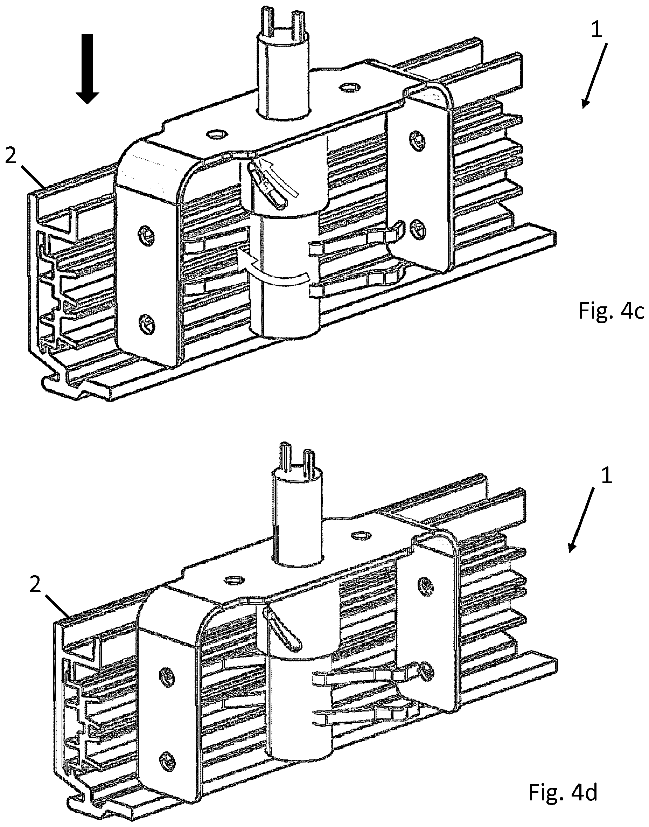

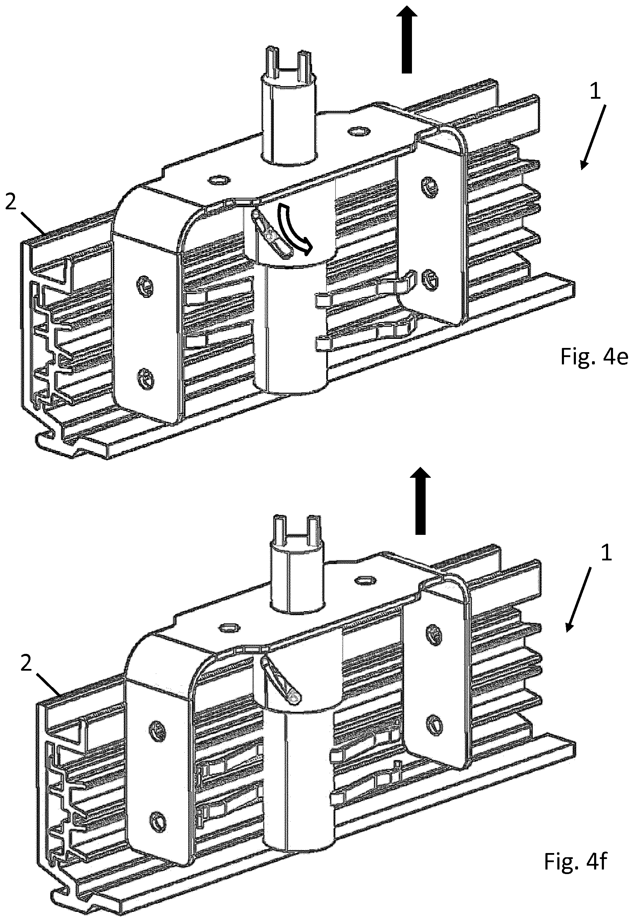

Die Figuren 4a bis 4d zeigen gleichermaßen die Absenkbewegung des Kraftfahrzeugsitzes zwecks Kontaktierung der Kontaktierungssockels 3 in der Kontaktierungsschiene 2. In den perspektivischen Darstellungen fehlt das Gehäuseelement 15, so dass die Ansicht auf die Zwangsführung des zylindrischen Elements 17 in der Hülse 14 d.h. die Führung eines Endbereichs des Stifts 22 in einem bogenförmigen Schlitz 21 ersichtlich ist.

Ausgehend von der in der Figur 4d gezeigten Position in der der Kraftfahrzeugsitz in das Schienensystem eingesetzt und das Kontaktierungselement mit der Kontaktierungsschiene kontaktiert ist, sind in den Figuren 4e - 4g Schritte beim Entnehmen des Kraftfahrzeugsitzes aus dem Schienensystem und Lösen der Kontaktierung gezeigt.

Beim Anheben des Kraftfahrzeugsitzes nach dem Lösen der Arretierung in dem Schienensystem wird das zylindrische Element 17 der Schleifereinheit ausgehend von der in Figur 4d gezeigten Position durch die Federvorspannung der Spiralfeder zwischen zylindrischem Element 17 und Gehäuseeinheit G zwangsgeführt über die Endbereiche des Stiftes 22 längs der Schlitze 21 wieder in die Ausgangsposition bewegt, wonach die Kontaktschwingenpaare 23 von den Kontaktstreifen 9 gelöst und verschwenkt in der Gehäuseeinheit gehalten sind. Das stellt sicher, dass beim Entnehmen des Kraftfahrzeugsitzes die Kontaktschwingenpaare immer eingeklappt sind.

### Bezuaszeichenliste

- 1: Kontaktierungssystem
- 2: Kontaktierungsschiene
- 3: Kontaktierungssockel

- 4: Trägerschiene
- 5a,5b: Schenkel
- 5c: Anschlagfläche
- 6: Halteleisten
- 7: Isolationsprofile
- 8: Nuten
- 9: Kontaktstreifen
- 10: Halteleisten
- 11: Führungsnuten
- 12: Sitzstruktur
- 13: Abdeckrahmen
- 14: Hülse
- 15: Gehäuseelement
- 16: Federelement
- 17: zylindrisches Element
- 18: Kontaktierungselement
- 19: Durchgangsbohrung
- 20: Bohrung
- 21: Schlitz
- 22: Stift
- 23: Kontaktschwingenpaar
- 24: ringförmiger Absatz
- 25: Aufnahmebohrung
- 26: Ausnehmung
- 27: Endbereich

- S1: Schenkel
- S2: Steg

## Patentansprüche

1. Kontaktierungssystem (1) zum elektrischen Verbinden eines Bordnetzes eines Kraftfahrzeugs mit einem entnehmbaren Kraftfahrzeugsitz oder einer Sitzanlage, wobei der Kraftfahrzeugsitz eine Sitzstruktur (12) und Stromkontaktelemente aufweist und über fahrzeugstrukturfest angebundene Führungsschienen eines Schienensystem in Längsrichtung verschiebbar und aus den Führungsschienen herausnehmbar gehalten ist, mit einer Kontaktierungsschiene (2), die mindestens zwei mit dem Bordnetz verbindbare Kontaktstreifen (9) aufweist und mindestens einem an der Sitzstruktur (12) anbindbaren Kontaktierungssockel (3), wobei der Kontaktierungssockel (3) eine in einer Gehäuseeinheit (G) bewegbar gehaltene Schleifereinheit (16, 17, 18) mit Kontaktierungselementen (18) umfasst und wobei zum elektrischen Verbinden mit dem Bordnetz des Kraftfahrzeugs beim Einsetzen (Hochrichtung) des Kraftfahrzeugsitzes in die Führungsschienen eine Relativbewegung zwischen Schleifereinheit (16, 17, 18) und Gehäuseeinheit (G) ausführbar ist und hierdurch eine Kontaktierung zwischen den Stromkontaktelementen und den Kontaktstreifen (9) über die Kontaktierunselemente (18) herstellbar ist, und wobei diese Kontaktierung beim Herausnehmen des Fahrzeugsitzes aus den Führungsschienen wieder aufhebbar ist, **dadurch gekennzeichnet, dass** die Relativbewegung eine kombinierte rotatorische und translatorische Bewegung ist, wobei die Rotation als eine Funktion der Translation erfolgt und eine schraubenförmige Drehbewegung zwischen Schleifereinheit (16, 17, 18) und Gehäuseeinheit ist.

2. Kontaktierungssystem (1) nach Anspruch 1, **dadurch gekennzeichnet, dass** die Kontaktierungsschiene (2) fahrzeugstrukturfest parallel zu den Führungsschienen anbindbar ist.

3. Kontaktierungssystem (1) nach Anspruch 1, **dadurch gekennzeichnet, dass** die Kontaktierungsschiene (2) in eine Führungsschiene integrierbar ausgeführt ist.

4. Kontaktierungssystem (1) nach Anspruch 1, **dadurch gekennzeichnet**, die Gehäuseeinheit (G) eine zylindrische Hülse (14) umfasst, wobei die Hülse (14) in der Mantelfläche eine Führungsnut aufweist, und wobei die Schleifereinheit ein zylindrisches Element (17) umfasst, und wobei an dem zylindrischen Element (17) ein Führungselement angeordnet ist, und wobei das Führungselement in die Führungsnut eingreift, wodurch die Relativbewegung zwangsgeführt ausführbar ist.

5. Kontaktierungssystem (1) nach einem der vorangehenden Ansprüche, **dadurch gekennzeichnet, dass** die Kontaktierungselemente (18) als stabförmige Elemente aus einem elektrisch leitfähigen Material, vorzugsweise aus einem Kupfermaterial, mit mindestens einer an ihrem unteren Endbereich angeordneten radial nach außen weisenden Kontaktschwinge, vorzugsweise Kontaktschwingenpaar (23) und an ihrem oberen Endbereich zur elektrischen Anbindung an die Stromkontaktelemente ausgeführt sind.

6. Kontaktierungssystem (1) nach einem der vorangehenden Ansprüche, **dadurch gekennzeichnet, dass** die Kontaktierungselemente (18) in Hochrichtung durch das zylindrische Element (17) verlaufen, wobei das zylindrische Element aus einem Kunststoffmaterial ausgeführt ist.

7. Kontaktierungssystem (1) nach einem der vorangehenden Ansprüche, **dadurch gekennzeichnet, dass** die Kontaktierungsschiene (2) eine im Wesentlichen als U-Profil mit Schenkeln (S1) und einen die Schenkel verbindenden Steg (S2) ausgeführte Trägerschiene (4) und an den gegenüberliegenden Seiten der Schenkel (S1) angebundene Isolationsprofile (7) aus einem Kunststoffmaterial umfasst, und wobei die Kontaktstreifen (9) an den Isolationsprofilen (7) angeordnet sind.

8. Kontaktierungssystem (1) nach Anspruch 7, **dadurch gekennzeichnet, dass** die Isolationsprofile (7) in Führungsnuten an der Trägerschiene (4) gehalten sind.

9. Kontaktierungssystem (1) nach Anspruch 7 oder 8, **dadurch gekennzeichnet, dass** die Isolationsprofile (7) jeweils zwei in Hochrichtung beabstandet zueinander verlaufende Nuten (8) aufweisen, und wobei in jedem Nutgrund der Nuten (8) ein in Längsrichtung verlaufender Kontaktstreifen (9) angeordnet ist.

10. Verfahren zum Kontaktieren eines entnehmbaren Kraftfahrzeugsitzes mit einem Bordnetz eines Kraftfahrzeugs mit einem Kontaktierungssystem (1) nach den Ansprüchen 1-9, mit den Schritten:
a) Einsetzen eines Kraftfahrzeugsitzes in eine Bodenschienen, wobei ein Kontaktierungssockel (3), welcher eine Gehäuseeinheit mit einer Hülse (14) und eine Schleifereinheit mit einem zylindrischen Element (17) und Kontaktierungselementen (18) umfasst, in eine Kontaktierungsschiene (2) eingeführt wird,
b) Absenken des Kraftfahrzeugsitzes bis ein zylindrisches Element (17) des Kontaktierungssockels (3) auf einen Anschlag auftrifft und in Hochrichtung in Bezug auf die Kontaktierunsschiene (2) ausgerichtet ist
c) Weiteres Absenken des Kraftfahrzeugsitzes, wobei beim Absenken der Gehäuseeinheit das zylindrische Element (17) verdreht wird und bei der Verdrehbewegung eine Kontaktierung der Kontaktierungselemente (18) mit der Kontaktierungsschiene (2) erfolgt.

## Claims

1. Contact system (1) for electrical connection of an electrical system of a motor vehicle to a removable motor vehicle seat or a seat assembly, wherein the motor vehicle seat comprises a seat structure (12) and current contact elements and can be displaced in the longitudinal direction by means of guide rails of a rail system fixedly attached to the structure of the vehicle and is removably retained in the guide rails, with a contacting rail (2) comprising at least two contact strips (9) connectable to the electrical system and at least one contacting socket (3) attachable to the structure of the seat (12), wherein the contacting socket (3) comprises a sliding unit (16, 17, 18) with contacting elements (18) movably retained in a housing unit (G) and a relative movement between the sliding unit (16, 17, 18) and the housing unit (G) can be carried out for electrical connection to the electrical system of the motor vehicle during insertion (vertical direction) of the vehicle seat in the guide rails and by which contact between the current contact elements and the contact strips (9) can be made by means of the contacting elements (18), and wherein said contacting can be removed again when removing the vehicle seat from the guide rails, **characterized in that** the relative movement is a combined rotational and translational movement, wherein the rotation is carried out as a function of the translation and is a helical rotary movement between the sliding unit (16, 17,18) and the housing unit.

2. Contact system (1) according to Claim 1, **characterized in that** the contacting rail (2) is fixedly attachable to the structure of the vehicle parallel to the guide rails.

3. Contact system (1) according to Claim 1, **characterized in that** the contacting rail (2) is implemented integrable within a guide rail.

4. Contact system (1) according to Claim 1, **characterized in that** the housing unit (G) comprises a cylindrical sleeve (14), wherein the sleeve (14) comprises a guide groove in the lateral surface, and wherein the sliding unit comprises a cylindrical element (17), and wherein a guide element is disposed on the cylindrical element (17), and wherein the guide element engages in the guide groove, whereby the relative movement can be carried out forcibly.

5. Contact system (1) according to one of the preceding claims, **characterized in that** the contacting elements (18) are implemented as rod-shaped elements of an electrically conductive material, preferably of a copper material, with at least one radially downward facing contact rocker disposed on the lower end region thereof, preferably a pair of contact rockers (23), and on the upper end region thereof for electrical connection to the current contact elements.

6. Contact system (1) according to one of the preceding claims, **characterized in that** the contacting elements (18) extend in the vertical direction through the cylindrical element (17), wherein the cylindrical element is made of a plastic material.

7. Contact system (1) according to one of the preceding claims, **characterized in that** the contacting rail (2) comprises a supporting rail (4) essentially implemented as a U-profile with legs (S1) and a bridge piece (S2) joining the legs and insulation profiles (7) of a plastic material attached to the opposing sides of the legs (S1), and wherein the contact strips (9) are disposed on the insulation profiles (7).

8. Contact system (1) according to Claim 7, **characterized in that** the insulation profiles (7) are retained in guide grooves on the supporting rail (4).

9. Contact system (1) according to Claim 7 or 8, **characterized in that** the insulation profiles (7) each comprise two grooves (8) extending spaced apart from each other in the vertical direction, and wherein a contact strip (9) extending in the longitudinal direction is disposed in each groove base of the grooves (8).

10. Method for connecting a removable vehicle seat to an electrical system of a motor vehicle with a contact system (1) according to Claims 1-9, with the steps:
a) inserting a vehicle seat in a floor rail, wherein a contacting socket (3) comprising a housing unit with a sleeve (14) and a sliding unit with a cylindrical element (17) and contacting elements (18) is inserted into a contacting rail (2),
b) lowering the vehicle seat until a cylindrical element (17) of the contacting socket (3) encounters a stop and is oriented in the vertical direction in relation to the contacting rail (2),
c) further lowering the vehicle seat, wherein when lowering the housing unit the cylindrical element (17) is rotated and during the rotational movement connection of the contacting elements (18) to the contacting rail (2) is carried out.

## Revendications

1. Système de contact (1) destiné à relier électriquement un réseau de bord d'un véhicule automobile à un siège de véhicule automobile amovible ou à un système de sièges, le siège de véhicule automobile comportant une structure de siège (12) et des éléments de contact de courant et pouvant coulisser dans la direction longitudinale sur des rails de guidage d'un système de rails qui sont fixés à la structure de véhicule et qui peuvent être retirés des rails de guidage, avec un rail de contact (2) qui comporte au moins deux bandes de contact (9) pouvant être reliées au réseau de bord et au moins une base de contact (3) qui peut être reliée à la structure de siège (12), la base de contact (3) comprenant une unité formant frotteur (16, 17, 18) munie d'éléments de contact (18) et maintenue de manière mobile dans une unité de boîtier (G), et un mouvement relatif entre l'unité formant frotteur (16, 17, 18) et l'unité de boîtier (G) pouvant être effectué pour établir la liaison électrique au réseau de bord du véhicule automobile lorsque le siège de véhicule automobile est inséré (direction verticale) dans les rails de guidage, le contact entre les éléments de contact de courant et les bandes de contact (9) pouvant être ainsi établi par le biais des éléments de contact (18), et ce contact pouvant être à nouveau annulé lorsque le siège de véhicule est retiré des rails de guidage, **caractérisé en ce que** le mouvement relatif est un mouvement combiné de rotation et de translation, la rotation étant effectuée en fonction de la translation et étant un mouvement de rotation hélicoïdal entre l'unité formant frotteur (16, 17, 18) et l'unité de boîtier.

2. Système de contact (1) selon la revendication 1, **caractérisé en ce que** le rail de contact (2) peut être relié de manière fixe à la structure de véhicule parallèlement aux rails de guidage.

3. Système de contact (1) selon la revendication 1, **caractérisé en ce que** le rail de contact (2) est destiné à être intégré dans un rail de guidage.

4. Système de contact (1) selon la revendication 1, **caractérisé en ce que** le boîtier (G) comprend un manchon cylindrique (14), le manchon (14) comportant une rainure de guidage dans la surface latérale, et l'unité formant frotteur comprenant un élément cylindrique (17), et un élément de guidage étant disposé au niveau de l'élément cylindrique (17), et l'élément de guidage s'engageant dans la rainure de guidage de manière à ce que le mouvement relatif puisse être effectué de manière guidée en force.

5. Système de contact (1) selon l'une des revendications précédentes, **caractérisé en ce que** les éléments de contact (18) sont réalisés sous la forme d'éléments en forme de tige à partir d'un matériau électriquement conducteur, de préférence d'un matériau cuivre, avec au moins une bascule de contact, de préférence une paire de bascules de contact (23), disposée à leur région d'extrémité inférieure et dirigée de préférence radialement vers l'extérieur, et à leur extrémité supérieure pour établir une liaison électrique avec les éléments de contact de courant.

6. Système de contact (1) selon l'une des revendications précédentes, **caractérisé en ce que** les éléments de contact (18) s'étendent dans la direction verticale à travers l'élément cylindrique (17), l'élément cylindrique étant réalisé à partir d'une matière synthétique.

7. Système de contact (1) selon l'une des revendications précédentes, **caractérisé en ce que** le rail de contact (2) comprend un rail de support (4), conçu sensiblement sous la forme d'un profilé en U pourvu de branches (S1) et d'une nervure (S2) reliant les branches, et des profilés isolants (7) en matière synthétique reliés aux côtés opposés des branches (S1), et les bandes de contact (9) étant disposées au niveau des profilés isolants (7).

8. Système de contact (1) selon la revendication 7, **caractérisé en ce que** les profilés isolants (7) sont maintenus dans des rainures de guidage au niveau du rail de support (4).

9. Système de contact (1) selon la revendication 7 ou 8, **caractérisé en ce que** les profilés isolants (7) comportent chacun deux rainures (8) s'étendant à distance l'une de l'autre dans la direction verticale, et une bande de contact (9) qui s'étend dans la direction longitudinale étant disposée dans le fond de chaque rainure (8).

10. Procédé de contact d'un siège de véhicule automobile amovible avec un réseau de bord d'un véhicule automobile pourvu d'un système de contact (1) selon les revendications 1 à 9, ledit procédé comprenant les étapes suivantes :
a) insérer un siège de véhicule automobile dans un rail de plancher, une base de contact (3), qui comprend une unité de boîtier pourvue d'un manchon (14) et une unité formant frotteur pourvue d'un élément cylindrique (17) et d'éléments de contact (18), étant insérée dans un rail de contact (2),
b) abaisser le siège de véhicule automobile jusqu'à ce qu'un élément cylindrique (17) de la base de contact (3) rencontre une butée et s'oriente dans la direction verticale par rapport au rail de contact (2),
c) abaisser davantage le siège de véhicule automobile, l'élément cylindrique (17) étant mis en rotation lorsque l'unité de boîtier est abaissée et les éléments de contact (18) étant mis en contact avec le rail de contact (2) pendant le mouvement de rotation.
